Europäisches Patentamt

European Patent Office

Office européen des brevets

(11) Veröffentlichungsnummer: **0 402 350**
**A1**

(12) ## EUROPÄISCHE PATENTANMELDUNG

(21) Anmeldenummer: **90890174.7**

(22) Anmeldetag: **01.06.90**

(51) Int. Cl.5: **H01M 10/14, B65G 57/04**

(30) Priorität: **07.06.89 AT 1401/89**

(43) Veröffentlichungstag der Anmeldung:
**12.12.90 Patentblatt 90/50**

(84) Benannte Vertragsstaaten:
**AT CH DE ES FR GB IT LI SE**

(71) Anmelder: **Akkumulatorenfabrik Dr. Leopold Jungfer**

**A-9181 Feistritz im Rosental(AT)**

(72) Erfinder: **Frey, Helmut**
**Ressnigweg 34**
**A-9170 Ferlach(AT)**

(74) Vertreter: **Holzer, Walter, Dipl.-Ing. et al**
**Patentanwälte Dipl.-Ing. Dr.techn. Schütz**
**Alfred Dipl.-Ing. Holzer Walter Dipl.-Ing.**
**Pfeifer Otto Fleischmanngasse 9**
**A-1040 Wien(AT)**

(54) **Vorrichtung zur Bildung von Stapeln von Akkumulatorplatten.**

(57) Vorrichtung zur Bildung von Stapeln von Akkumulatorplatten, mit einer endlosen horizontalen Transporteinrichtung (13) zur Aufnahme und zum Abtransport der je aus einer vorbestimmten Anzahl von Platten gebildeten Stapel, der eine Plattensatz-Übergabeeinrichtung (9) zugeordnet ist, die in vertikaler Richtung relativ zur Transporteinrichtung zwischen einer angehobenen Stellung, in welcher die Übergabeeinrichtung (9) aus einander paarweise gegenüberliegenden Magazinen (2, 6) abwechselnd und zyklisch mit einer negativen Platte, einer Separatorplatte, einer positiven Platte und einer Separatorplatte beschickbar ist, wobei die Übergabeeinrichtung (9) entsprechend der Höhe eines Plattensatzes schrittweise absenkbar ist, in eine abgesenkte Übergabestellung bewegbar ist, in welcher die Übergabeeinrichtung den auf ihr aus einer vorbestimmten Anzahl von Plattensätzen gebildeten Plattenstapel an die Transporteinrichtung übergibt, die intermittierend bewegbar ist.

Fig.1

EP 0 402 350 A1

## Vorrichtung zur Bildung von Stapeln von Akkumulatorplatten

Die Erfindung betrifft eine Vorrichtung zur Bildung von Stapeln von Akkumulatorplatten, mit einer endlosen horizontalen Transporteinrichtung zur Aufnahme und zum Abtransport der je aus einer vorbestimmten Anzahl von Platten gebildeten Stapel.

Bisher wurden die Akkumulatorplatten und die Separatoren einzeln auf einer kontinuierlich laufenden Transportkette abgelegt und erst am Ende dieser Transportstrecke mit Hilfe einer aufwendigen Übernahmevorrichtung zu einem Plattensatz gestapelt.

Aufgabe der Erfindung ist die Schaffung einer Vorrichtung zur Bildung von Stapeln von Akkumulatorplatten, die eine automatische, rasche und einfache Stapelbildung und -ausrichtung sowie den Abtransport der Stapel ermöglicht. Diese Aufgabe wird bei der Vorrichtung der eingangs genannten Art erfindungsgemäß dadurch gelöst, daß der Transporteinrichtung eine Plattensatz-Übergabeeinrichtung zugeordnet ist, die in vertikaler Richtung relativ zur Transporteinrichtung zwischen einer angehobenen Stellung, in welcher die Übergabeeinrichtung aus einander paarweise gegenüberliegenden Magazinen abwechselnd und zyklisch mit einer negativen Platte, einer Separatorplatte, einer positiven Platte und einer Separatorplatte beschickbar ist, wobei die Übergabeeinrichtung entsprechend der Höhe eines Plattensatzes schrittweise absenkbar ist, in eine abgesenkte Übergabestellung bewegbar ist, in welcher die Übergabeeinrichtung den auf ihr aus einer vorbestimmten Anzahl von Plattensätzen gebildeten Plattenstapel -an die Transporteinrichtung übergibt, die intermittierend bewegbar ist.

Durch die erfindungsgemäße Vorrichtung wird auf konstruktiv einfache Weise eine rasche und damit rationelle Fertigung der Stapel gewährleistet.

Vorzugsweise ist der Übergabeeinrichtung eine Einrichtung zum Ausrichten des Plattenstapels zugeordnet.

Gemäß einem weiteren Merkmal der Erfindung weist die Transporteinrichtung parallel laufende Transportketten auf, die von der Übergabeeinrichtung durchsetzt werden, welche vorzugsweise eine druckmittelbetätigte, heb-und senkbare Plattform aufweist.

Weitere Einzelheiten der Erfindung werden nachfolgend an Hand der Zeichnungen näher beschrieben. Es zeigen:

Fig. 1 eine schematische Seitenansicht der erfindungsgemäßen Vorrichtung,

Fig. 2 eine Draufsicht der Vorrichtung nach Fig. 1, und

Fig. 3 eine Detaildarstellung eines Teiles der Vorrichtung nach Fig. 1 in der Seitenansicht.

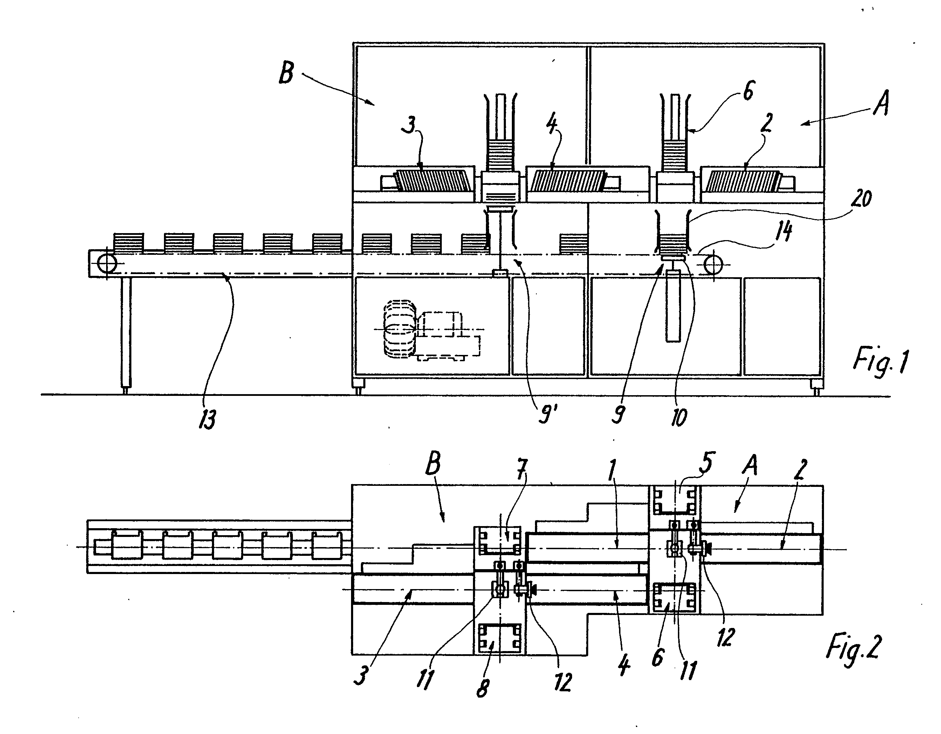

In den Fig. 1 und 2 sind zwei parallele Gruppen A, B von Vorrichtungen zur Bildung von Stapeln von Akkumulatorplatten mit einander jeweils paarweise gegenüberliegenden Magazinen dargestellt, u.zw. Plattenmagazine 1, 2 und 3, 4 sowie Separatorenmagazinen 5, 6 und 7, 8, wobei die Transportrichtung der Separatorenmagazine im rechten Winkel zur Transportrichtung der Plattenmagazine verläuft. Die Plattenmagazine 1 und 3 enthalten beispielsweise positive Platten, während die Plattenmagazine 2 und 4 negative Platten enthalten.

Die Entnahme der Separatoren aus den Separatorenmagazinen 5, 6 und 7, 8 erfolgt vorzugsweise gemäß der AT-PS 381.809 der Anmelderin, wonach die Separatoren aus dem jeweiligen Stapel durch eine Walze aus elastischem Material zu Übergabeeinrichtungen 9, 9' ausgetragen werden. Jede Übergabeeinrichtung 9, 9' weist eine druckmittelbetätigte, heb- und senkbare Plattform 10, 10' auf, auf der abwechselnd negative und positive Platten sowie Separatoren aus den Plattenmagazinen 1, 2 und 3, 4 bzw. Separatorenmagazinen 5, 6 und 7, 8 abgelegt werden, wobei die Ablage der negativen und positiven Platten aus den Plattenmagazinen 1, 2 und 3, 4 mit Hilfe von Saugplatten 11, 12 erfolgt. Nach der Bildung eines derartigen Plattensatzes wird der Zyklus wiederholt, wozu die Übergabeeinrichtungen 9, 9' jeweils entsprechend der Satzhöhe abgesenkt werden. Nach der Bildung eines Plattenstapels aus einer vorbestimmten Anzahl von Plattensätzen wird der Stapel mittels der Plattform 10 auf eine Transporteinrichtung 13 abgesenkt und übergeben, die beim gezeigten Beispiel in Form von parallel verlaufenden Transportketten 14 ausgebildet ist, welche von der Übergabeeinrichtung durchsetzt werden.

Die Ablage der aus den Plattenmagazinen 1 und 2 und den Separatorenmagazinen 5, 6 gebildeten Stapel auf die Transportketten 14 erfolgt direkt von der Plattform 10 aus, während die aus den Plattenmagazinen 3 und 4 und den Separatorenmagazinen 7, 8 gebildeten Stapel mittels einer nicht dargestellten Einrichtung von der Plattform 101 auf die Transportketten 14 geschoben werden, wobei intermittierend ein Stapel von der Plattform 10 bzw. 10' auf die Transportketten 14 gelangt. Am Austragende der Transportketten 14 werden die fertigen Stapel mittels einer nicht dargestellten Vorrichtung und zu einer weiteren Fertigungsstation übergeführt. Wie aus Fig. 1 ersichtlich ist, ist der Übergabeeinrichtung eine Einrichtung 20 zum seitlichen Ausrichten des Plattenstapels zugeordnet, die in der Zeichnung nur angedeutet ist und z.B. aus Seitenführungen bestehen kann.

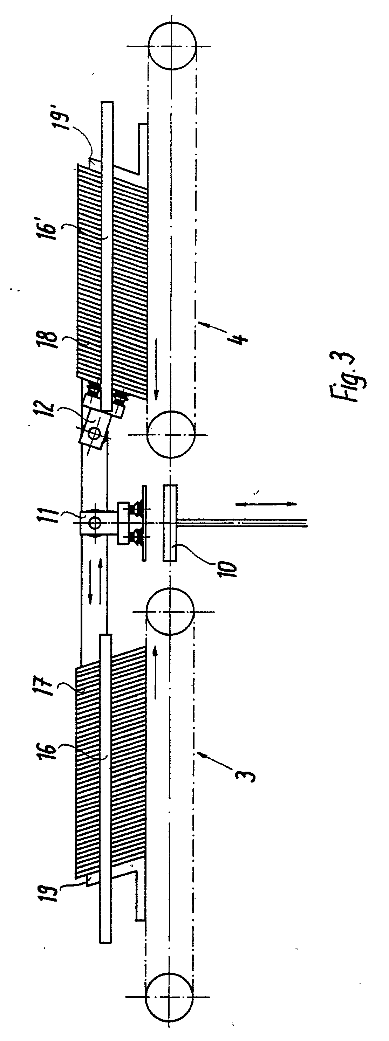

Fig. 3 zeigt eine Detaildarstellung der Plattenmagazine 3, 4 mit zur Führung der Platten vorgesehenen Borstenleisten 16, 16' und mit jeweils einem zur Abstützung der schrägstehenden Platten 17, 18 vorgesehenen Plattenfolger 19, 19'. Die Platten 17, 18 werden abwechselnd mittels der Saugplatten 11, 12 auf die Plattform abgelegt.

Die Betätigung der einzelnen Einrichtungen wird durch eine nicht gezeigte Steuereinrichtung bewirkt.

Es versteht sich, daß das geschilderte Ausführungsbeispiel im Rahmen der Erfindung verschiedentlich abgewandelt werden kann. Insbesondere braucht die zusätzliche zweite Vorrichtungsgruppe B nicht unbedingt vorhanden zu sein. Ferner können die Platten- und Separatormagazine auch anderen als den dargestellten Aufbau haben.

## Ansprüche

1. Vorrichtung zur Bildung von Stapeln von Akkumulatorplatten, mit einer endlosen horizontalen Transporteinrichtung zur Aufnahme und zum Abtransport der je aus einer vorbestimmten Anzahl von Platten gebildeten Stapel, dadurch gekennzeichnet, daß der Transporteinrichtung (13) eine Plattensatz-Übergabeeinrichtung (9) zugeordnet ist, die in vertikaler Richtung relativ zur Transporteinrichtung zwischen einer angehobenen Stellung, in welcher die Übergabeeinrichtung (9) aus einander paarweise gegenüberliegenden Magazinen (1, 2, 5, 6) abwechselnd und zyklisch mit einer negativen Platte, einer Separatorplatte, einer positiven Platte und einer Separatorplatte beschickbar ist, wobei die Übergabeeinrichtung (9) entsprechend der Höhe eines Plattensatzes schrittweise absenkbar ist, in eine abgesenkte Übergabestellung bewegbar ist, in welcher die Ubergabeeinrichtung den auf ihr aus einer vorbestimmten Anzahl von Plattensätzen gebildeten Plattenstapel an die Transporteinrichtung (13) übergibt, die intermittierend bewegbar ist.

2. Vorrichtung nach Anspruch 1, dadurch gekennzeichnet, daß der Übergabeeinrichtung (9) eine Einrichtung (20) zum Ausrichten des Plattenstapels zugeordnet ist.

3. Vorrichtung nach Anspruch 1 oder 2, dadurch gekennzeichnet, daß die Transporteinrichtung parallel laufende Transportketten (14) aufweist, die von der Übergabeeinrichtung (9) durchsetzt werden, welche vorzugsweise eine druckmittelbetätigte, heb- und senkbare Plattform (10) aufweist.

Fig.1

Fig.2

EP 0 402 350 A1

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | <u>DE - A1 - 3 208 772</u><br>(DETA)<br>* Zusammenfassung; Fig. *<br>-- | 1,3 | H 01 M 10/14<br>B 65 G 57/04 |
| A | <u>EP - A1 - 0 029 017</u><br>(ELBAK)<br>* Zusammenfassung; Fig. 1 *<br>-- | 1,3 | |
| A | <u>GB - A - 1 524 146</u><br>(KOLOSOV)<br>* Anspruch 1; Fig. 1 *<br>-- | 1,3 | |
| A | <u>US - A - 2 652 933</u><br>(WILLARD et al.)<br>* Fig. 6,9,12; Spalte 6, Zeilen 69-74 *<br>-- | 1,3 | |
| A | <u>AT - B - 249 586</u><br>(SMIDTH)<br>* Fig. 1; Seite 1, Absatz 1 *<br>---- | 1 | |

RECHERCHIERTE SACHGEBIETE (Int. Cl.⁵)

B 65 G
H 01 M

Der vorliegende Recherchenbericht wurde für alle Patentansprüche erstellt.

| Recherchenort | Abschlußdatum der Recherche | Prüfer |
|---|---|---|
| WIEN | 07-09-1990 | LUX |